(19) Europäisches Patentamt
European Patent Office
Office européen des brevets

(11) **EP 1 917 565 B1**

(12) **EUROPÄISCHE PATENTSCHRIFT**

(45) Veröffentlichungstag und Bekanntmachung des Hinweises auf die Patenterteilung:
**09.12.2009 Patentblatt 2009/50**

(21) Anmeldenummer: **06775866.4**

(22) Anmeldetag: **17.08.2006**

(51) Int Cl.:
***G05B 19/18*** (2006.01)     ***G05B 19/404*** (2006.01)

(86) Internationale Anmeldenummer:
**PCT/DE2006/001438**

(87) Internationale Veröffentlichungsnummer:
**WO 2007/022755 (01.03.2007 Gazette 2007/09)**

(54) **VERFAHREN UND VORRICHTUNG ZUR STEUERUNG UND REGELUNG VON KRÄFTEN AN SERVO-ELEKTRISCHEN PRESSEN**

METHOD AND DEVICE FOR CONTROLLING AND ADJUSTING FORCES ON SERVO-ELECTRIC PRESSES

PROCEDE ET DISPOSITIF POUR COMMANDER ET REGULER DES FORCES SUR DES PRESSES SERVO-ELECTRIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.08.2005 DE 102005040265**

(43) Veröffentlichungstag der Anmeldung:
**07.05.2008 Patentblatt 2008/19**

(73) Patentinhaber: **Müller Weingarten AG
88250 Weingarten (DE)**

(72) Erfinder:
• **DARR, Uwe
99094 Erfurt (DE)**
• **SCHMIDT, Steffen
99198 Urbich (DE)**
• **HEDLER, Rainer
99120 Windischholzhausen (DE)**

(74) Vertreter: **Stern, Wolfgang et al
Weidner Stern
Patentanwälte
Rubianusstrasse 8
99084 Erfurt (DE)**

(56) Entgegenhaltungen:
**EP-A- 1 201 416     EP-A1- 0 922 562
DE-A1- 19 536 728     DE-A1- 19 705 462
DE-A1- 19 952 941     JP-A- 10 202 327
JP-A- 11 058 100**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung-betrifft ein Verfahren zur Steuerung und Regelung von Kräften an servo-elektrischen Pressen nach dem Oberbegriff des Patentanspruches 1 und eine Vorrichtung zur Durchführung des Verfahrens nach dem Oberbegriff des Patentanspruchs 7 oder 8.

Stand der Technik

In der JP 11058100 A wird eine Vorrichtung und Methode zum Schutz von Werkzeugen in Servo-Pressen beschrieben, die mit Hilfe eines Motorstromsensors und eines Positionssensors feststellt, ob die Presskraft des Stößels in einem bestimmten Positionsbereich den maximal zulässigen Wert überschreitet und in einem solchen Fall einen Notstopp des Stößels auslöst. Diese Methode berücksichtigt nicht, dass je nach Bewegungsablauf des Stößels ein bestimmter Anteil des Motorstroms für die Beschleunigung und das Abbremsen von linearen und rotatorischen Massenträgheiten benötigt und damit nicht als Presskraft wirksam wird. Dadurch ist die Anwendung dieser Vorrichtung und Methode nur auf Bewegungsphasen mit konstanter Geschwindigkeit beschränkt.

Nach der DE 195 36 728 A1 ist eine Antriebssteuereinrichtung für eine mittels Servomotor antreibbare Stanzmaschine bekannt, bei der mit einem begrenzt verfügbarem Gesamtantriebsmoment zur Erhöhung der Schlagrate die minimal erforderliche Hubhöhe so einstellbar ist, dass entweder bei einem hohem Stanzmomentbedarf die Beschleunigung des Stößels aus der oberen Umkehrposition bereits vor dem Stanzvorgang abgeschossen ist oder bei niedrigem Stanzmomentbedarf während des Stanzvorgangs noch ein anteiliges. Beschleunigungsmoment nutzbar ist.
Die zugehörige Stößelsteuereinrichtung zum Antrieb des Servomotors enthält eine Positioniersteuereinrichtung und eine Geschwindigkeitssteuereinrichtung, mit dessen Ausgangssignal der Servomotor über einen Verstärker ansteuerbar ist, wobei innerhalb des Lage-Regelkreises einerseits mittels eines Positionsdetektors die Ist-Lage erfasst und in die Positioniersteuereinrichtung rückführbar ist und andererseits die Ist-Geschwindigkeit mittels eines Geschwindigkeitsdetektors in die Geschwindigkeitssteuereinrichtung rückgeführt wird.
Von der Steuereinrichtung sind neben der einstellbaren Blechhöhe die speicherbare Geschwindigkeitskurve und das Beschleunigungsdrehmoment sowie das Stanzdrehmoment, das durch Rückführung des aus den elektrischen Stromwerten eines Drehmomentendetektors ermittelten Drehmoment-Istwertes berechnet wird, abrufbar.
Das Gesamtdrehmoment berücksichtigt ferner ein die Reibung der beweglichen Elemente verursachendes Reibmoment. Eine Steuerung und Regelung von Kräften und deren zugehörige Drehmomente ist nicht offenbart.

In der EP 1 201 416 A1 ist eine Vorrichtung zur Korrektur des unteren Umkehrpunktes an Servopressen mit Spindelantrieb für die Stößelbewegung offenbart. Innerhalb eines Lage-Regelkreises mit Istwert-Rückführung der Stößelposition zur Erfassung des unteren Umkehrpunktes sollen die Verlagerungen des unteren Umkehrpunktes infolge Auffederung unter Last und Wärmedehnungen ausgeglichen werden.
Neben einem Linearmaßstab zur Erfassung der Stößelposition ist ein Sensor zur Temperaturerfassung des Umformwerkzeuges in die Steuerung integriert. Darüber hinaus werden zur Ermittlung der Stößelkraft entweder die Stromwerte des Servomotors in der Steuerung ausgewertet oder die Stößelkraft wird direkt mit einer Kraftmessdose aufgenommen. Dabei dient die Ist-Kraft-Rückführung zum Vergleich mit einer vorgegebenen. Soll-Kraft, wodurch eine entsprechende Lagekorrektur des unteren Umkehrpunktes ausgelöst wird. Eine Steuerung und Regelung der Kräfte oder Drehmomente selbst ist nicht offenbart.

In der EP 0 922 562 A1 wird eine Methode zur Momentenregelung an servo-elektrischen Pressen beschrieben, die den Wert zur Begrenzung des Motormoments beschleunigungsabhängig korrigiert. Damit kann die Presskraft in jeder Bewegungsphase des Stößels ohne direkte Kraftmessung auf einen gewünschten Maximalwert begrenzt werden. Bei dieser Methode soll der beschleunigungsabhängige Momentenanteil in Abhängigkeit von der aktuellen Soll- oder Ist-Geschwindigkeit berechnet und damit der Wert zur Begrenzung des Motormomentes korrigiert werden. Da die Geschwindigkeit des Pressenstößels während des Umformvorganges Änderungen unterliegt und diese zur Ermittlung der Beschleunigung zusätzlich differenziert werden muss, ist diese Methode anfällig gegen Störungen des Geschwindigkeitssignals. Um dies zu verbessern, wird vorgeschlagen, Tiefpassfilter oder sogenannte Beobachter einzusetzen, wodurch einerseits die Genauigkeit beeinträchtigt und andererseits die erforderliche Rechenleistung der Steuereinrichtung erhöht wird. Nachteilig bei beiden Lösungen ist darüber hinaus, dass weitere Einflussgrößen, die zu einer Abweichung der über das Motormoment ermittelten Presskraft führen können, unberücksichtigt bleiben. Hierzu gehören im Wesentlichen die Temperaturabhängigkeit des Drehmomentenfaktors des Motors, die Reibung im System und gegebenenfalls variable Getriebeübersetzungen. Letztere Einflussgröße tritt insbesondere bei Pressen mit Hebel- oder Kurbelantrieben auf.
In der DE 199 52 941 A1 wird ein Steuerungsverfahren für Servo-Pressen mit mehreren Stößeln vorgeschlagene, das eine Kombination von Lageregelung und Momentenbegrenzung verwendet, um eine definierte Lastverteilung zwischen den Pressenstößeln zu erreichen und um die gegenseitige Beeinflussung zu verringern. Da dieses Verfahren auf Pressen mit mehreren. Stößeln abzielt, wird keine Lösung zur Regelung der Kippung eines Pressenstößels mit mehreren Druckpunkten aufgezeigt. Außerdem wird der Bewegungsablauf zeitabhängig gesteuert, so dass Störgrößen im Bewegungsablauf das Risiko einer Asynchronität einerseits mit peripheren Einrichtungen und andererseits mit benachbarten Stößeln einer Mehrpressen-Anlage erhöhen.

Darüber hinaus beschränken sich vorgenannte Lösungen auf die Anwendung für den Antrieb des Stößels. Ein Einsatz an servo-elektrischen Ziehkissen von Pressen ist nicht vorgesehen.

Aufgabe und Vorteil der Erfindung

Der Erfindung liegt die Aufgabe zugrunde, ein Verfahren und eine Vorrichtung zur Steuerung und Regelung von Kräften an Pressen mit servo-elektrischen Stößel- und/oder Ziehkissenantrieben zu schaffen, bei dem mittels einer einfachen Struktur der Steuerung und Regelung unter Berücksichtigung der Einflussgrößen, wie Beschleunigung, Getriebeübersetzung, Reibung und Temperatur mit oder ohne Verwendung von separaten istwerterfassenden Kraft- oder Momentensensoren, ein präziser und reproduzierbarer Ablauf des Umformvorganges ermöglicht wird.

Erfindungsgemäß wird die Aufgabe durch ein Verfahren zur Steuerung und Regelung von Kräften an servo-elektrischen Pressen mit den Merkmalen des Anspruches 1 gelöst. Weitere detaillierte Ausgestaltungen des Verfahrens sind in den Ansprüchen 2 bis 6 beschrieben. Die Durchführung des Verfahrens nach den Ansprüchen 1 bis 6 erfolgt mit einer Vorrichtung mit den Merkmalen gemäß der Ansprüche 7 oder 8.

Das Verfahren und die Vorrichtung eignen sich sowohl für den Antrieb des Stößels als auch für Ziehkissen mit servo-elektrischen Antrieben und stellen eine vorteilhafte Ergänzung zu der für den jeweiligen Antrieb erforderlichen Ablaufsteuerung dar. Dabei ist es insbesondere von Vorteil, wenn diese Ablaufsteuerungen auf der Basis einer leitwellengesteuerten elektronischen Kurvenscheibenregelung arbeiten und diese Leitwelle ebenso für das vorgeschlagene Verfahren genutzt wird.

Neben der kombinatorischen Anwendung von servo-elektrischen Antrieben für die Stößel- und Ziehkissenbewegung gemeinsam in einer servo-elektrischen Presse, ist es ebenso denkbar, entweder nur den Stößel servo-elektrisch bei Nutzung eines konventionellen, beispielsweise hydraulischen Ziehkissens anzutreiben oder nur ein servo-elektrisches Ziehkissen in einer konventionellen Presse mit mechanischem oder hydraulischem Antrieb einzusetzen.

Kerngedanke des vorgeschlagenen Verfahrens ist es, die Leitwellenfunktion einerseits zur Erzeugung der teile- und prozeßspezifischen Soll-Drehmomente und andererseits zur Erzeugung der Drehmomenten-Korrekturwerte infolge verschiedener Einflussgrößen gemeinsam mit einer Temperaturkompensation des Drehmomentenfaktors zur Bildung der Stromsollwerte für die Servomotoren zu nutzen.

Beispielsweise kann der für die Korrektur des Antriebsmomentes erforderliche Beschleunigungsverlauf in normierter Form aus der Positions-Kurvenscheibe vorberechnet werden und während des Prozesses leitwellenabhängig ausgelesen werden. Hierdurch erhält man ein stabiles Beschleunigungssignal, ohne dass entsprechende Berechnungen in Echtzeit erforderlich sind.

Durch das vorgeschlagene Verfahren können in einem ersten Fall die Einflüsse der wesentlichen auf die Prozesskraft wirkenden Störgrößen soweit reduziert werden, dass ein separates Meßsystem für die Kraftregelung entfallen kann.

In einem zweiten Fall können Korrekturwerte berechnet werden, die zur Vorsteuerung eines mit Sensorik gestützten geschlossenen Kraftregelkreises verwendet werden, wodurch eine weitere Verbesserung der Regelgüte erzielt wird.

Ausführungsbeispiele

Die Erfindung wird nachstehend an Ausführungsbeispielen näher erläutert. Die zugehörige Zeichnung zeigt:

Fig. 1    Prinzipieller Aufbau einer servo-elektrischen Presse mit servo-elektrischem Ziehkissen

Fig. 2    Schrittfolge des Verfahrens zur Steuerung und Regelung einer servo-elektrischen Presse in einer ersten Ausgestaltung

Fig. 3    Schrittfolge des Verfahrens zur Steuerung und Regelung einer servo-elektrischen Presse in einer zweiten Ausgestaltung

Fig. 4    Prinzipieller Aufbau der Vorrichtung zur Steuerung und Regelung von Kräften an leitwellengesteuerten servo-elektrischen Pressen

Fig. 5    Blockschaltbild für die Stößelkraftregelung mit leitwellengesteuerter beschleunigungsabhängiger und übersetzungsabhängiger Sollwertkorrektur

Fig. 6    Blockschaltbild für die Ziehkissenkraftregelung mit leitwellengesteuerter beschleunigungs- und reibungsabhängiger Sollwertkorrektur und Temperatur-kompensation des Drehmomentenfaktors.

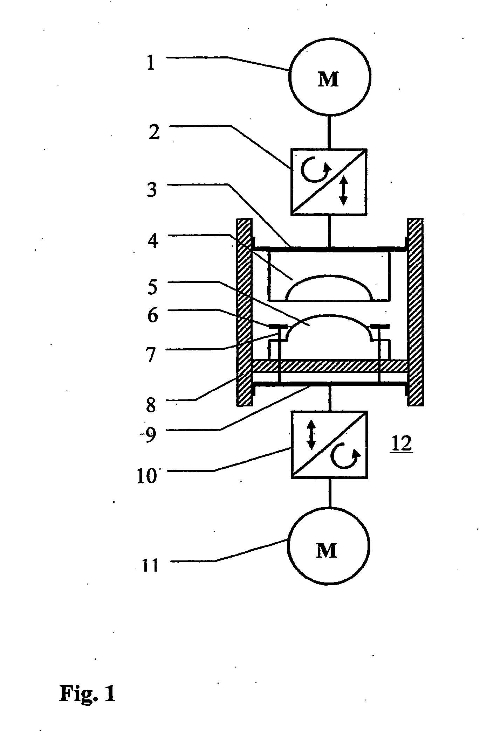

Fig. 1 zeigt den schematischen, Aufbau einer servo-elektrischen Presse mit Servoantrieben für die Stößel- und Ziehkissenbewegung. Im Gestell 8 ist einerseits das Unterwerkzeug 5 und andererseits der vertikal bewegliche Stößel 3 zur Aufnahme des Oberwerkzeuges 4 angeordnet. Der Antrieb des Stößels 3 erfolgt durch einen ersten Servomotor 1 und ein erstes Getriebe 2 zur Umwandlung der Rotations- in eine Linearbewegung. Das Unterwerkzeug 5 enthält einen vertikal beweglichen Blechhalterrahmen 6, der sich über Ziehstifte 7 auf der ebenfalls vertikal beweglichen Druckwange 9 des Ziehkissens 12 abstützt. Der Antrieb des Ziehkissens 12 erfolgt durch einen zweiten Servomotor 11 und ein zweites Getriebe 10 zur Umwandlung der Rotations- in eine Linearbewegung. Je nach konstruktivem Aufbau der Presse können sowohl die ersten Servomotore 1 mit ersten Getrieben 2 für den Stößelantrieb als auch die zweiten Servomotore 11 mit zweiten Getrieben 10 für den Ziehkissenantrieb mehrfach vorhanden sein.

Durch die ersten und zweiten Servomotore 1 und 11 werden sowohl die Bewegungsabläufe als auch die Kraftverläufe von Stößel 3 und Ziehkissen 12 für den Umformvorgang erzeugt. Das vorgeschlagene Verfahren zur Steuerung und Regelung der Kräfte kann hierbei vorteilhaft in Kombination zu der für die jeweilige Funktion erforderlichen Ablaufsteuerung der Stößel- und Ziehkissenbewegung eingesetzt werden.

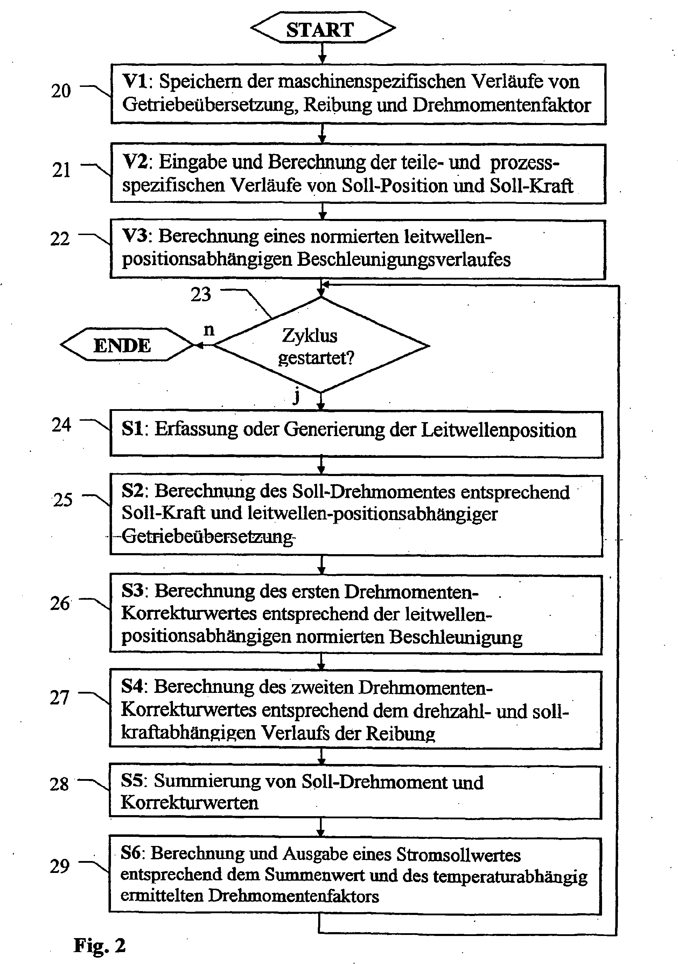

Die nachfolgend beschriebenen Ausführungsbeispiele in Form von Schrittfolgen berücksichtigen die Einflussgrößen auf die Steuerung und Regelung der Kräfte, wie Beschleunigung, Getriebeübersetzung, Reibung und Temperatur in Summe. Es ist ebenso denkbar, dass in alternativen Schrittfolgen nur einzelne Einflussgrößen berücksichtigt werden. In Fig. 2 ist das vorgeschlagene Verfahren in Form einer Schrittfolge für ein erstes Ausführungsbeispiel dargestellt. In der ersten Vorbereitungsphase 20 werden einmalig die maschinenspezifischen Verläufe der Getriebeübersetzung i, der Reibung $M_r$ in der Kraftübertragungskette und der Drehmomentenfaktor $K_m$ der Servomotore 1, 11 ermittelt, in Form einer Tabelle, einer mathematischen Funktion oder einer Kombination aus beiden dargestellt und in der Steuerung gespeichert.

Die variable Getriebeübersetzung i von Hebel-, Kurbel- oder Exzenterantrieben kann in Abhängigkeit von der Leitwellenposition $\varphi$ mit der Funktion

$$i = f(\varphi)$$

dargestellt werden.

Die Reibung $M_r$ tritt beispielsweise in Lagern, Führungen und spindeln auf und ist u.a. wesentlich von der übertragenen Kraft und aktuellen Geschwindigkeit nach der Funktion

$$M_r = f(F_{soll}, v)$$

abhängig.

Der Drehmomentenfaktor $K_m$ der Servomotore 1,11 ist von der Motortemperatur $\theta$ nach der Funktion

$$K_m = f(\theta)$$

abhängig.

In der zweiten Vorbereitungsphase 21 werden die erforderlichen teile- und prozess- spezifischen Soll-Verläufe der Position und Kraft des Stößels 3 und/oder Ziehkissens 12 in Abhängigkeit von der Leitwellenposition $\varphi$ einmalig, beispielsweise manuell über eine entsprechende Bedienoberfläche in die Steuerung eingegeben.

Die Steuerung berechnet aus den Eingabewerten nach den Funktionen

$$s_{soll} = f(\varphi), \quad F_{soll} = f(\varphi)$$

die eigentlichen Verläufe in Form von Tabellen, mathematischen Funktionen oder je einer Kombination aus beiden. Dieser leitwellenabhängige Soll-Verlauf der Position wird auch als Positions-Kurvenscheibe bezeichnet.

In der dritten Vorbereitungsphase 22 wird durch die Steuerung aus dem in der Vorbereitungsphase 21 eingegebenen Soll-Verlauf der Position der einer definierten Leitwellendrehzahl (Pressenhubzahl) zugeordnete normierte Beschleunigungsverlauf in Abhängigkeit von der Leitwellenposition nach der Funktion

$$\alpha_n = f(\varphi)$$

berechnet. Die in den Vorbereitungsphasen 21, 22 ermittelten Verläufe werden in der Steuerung gespeichert und können bei Umrüstung auf ein anderes Teil aus dem Speicher abgerufen werden.

Es ist ebenso denkbar, die Vorbereitungsphasen 21,22 für ein neues Teil schon auszuführen, während der Bewegungszyklus für das vorherige Teil noch ausgeführt wird.

Nach dem Startsignal 23 beginnt mit dem ersten Verfahrensschritt 24 der zyklische Ablauf. Je nach Funktionsprinzip der Pressensteuerung wird die Position φ des Stößels 3 entweder als reale Leitwelle 41 über einen ersten Positionsgeber 51 erfasst oder als virtuelle Leitwelle 60 durch die Steuerung generiert.

Im zweiten Verfahrensschritt 25 wird das Soll-Drehmoment $M_{soll}$ der Servomotore 1,11 aus der aktuellen Soll-Kraft $F_{soll}$ und der der aktuellen Leitwellenposition φ zugeordneten Getriebeübersetzung i(φ) nach der Funktion

$$M_{soll}\ (\varphi)\ =\ f\ [\ F_{soll}\ (\varphi),\ i\ (\varphi)\ ]$$

berechnet.

Im dritten Verfahrensschritt 26 wird ein erster Drehmomenten-Korrekturwert $M_{korr1}$ aus dem der aktuellen Leitwellenposition φ zugeordneten normierten Beschleunigungswert $\alpha_n(\varphi)$, der momentanen Leitwellengeschwindigkeit ω und der zu beschleunigenden Rotationsmasse J nach der Funktion

$$M_{korr1}\ =\ f\ [\alpha_n(\varphi),\ J,\ \omega\ ]$$

berechnet.

J beinhaltet hierbei die rotierenden Massen des Motors, des Getriebes und der Kupplung zwischen Motor und Getriebe. Je nach Funktionsprinzip der Pressensteuerung wird die Leitwellengeschwindigkeit ω entweder durch einen ersten Positionsgeber 51 oder Tachometer erfasst oder es wird das Geschwindigkeitssignal der durch die Steuerung generierten virtuelles Leitwelle verwendet.

Im vierten Verfahrensschritt 27 wird ein zweiter Drehmomenten-Korrekturwert $M_{korr2}$ aus der der aktuellen Soll-Kraft $F_{soll}$ und der Istgeschwindigkeit v zugeordneten Reibung $M_r$ nach der Funktion

$$M_{korr2}\ =\ M_r\ =\ f\ (F_{soll},\ v)$$

ermittelt.

Im fünften Verfahrenschritt 28 wird ein resultierendes Soll-Drehmoment $M_{res}$ durch Summierung der in den Verfahrensschritten 25, 26 und 27 berechneten Drehmomentenwerte nach der Funktion

$$M_{res}\ =\ M_{soll}\ +\ M_{korr1}\ +\ M_{korr2}$$

ermittelt.

Im sechsten Verfahrensschritt 29 wird ein Stromsollwert $I_{soll}$ aus dem resultierenden Soll- Drehmoment $M_{res}$ und dem der aktuellen Motortemperatur θ zugeordneten Drehmomentenfaktor $K_M(\theta)$ nach der Funktion

$$I_{soll}\ =\ f\ [\ M_{res}\ ,\ K_M(\theta)\ ]$$

berechnet und an den Stromregler 48 ausgegeben. Solange der zyklische Ablauf gestartet ist, wird der Ablauf mit dem ersten Verfahrensschritt 24 zyklische fortgesetzt, sodass ständig aktualisierte Stromsollwerte $I_{soll}$ an den Stromregler 48 der Servomotore 1,11 ausgegeben werden.

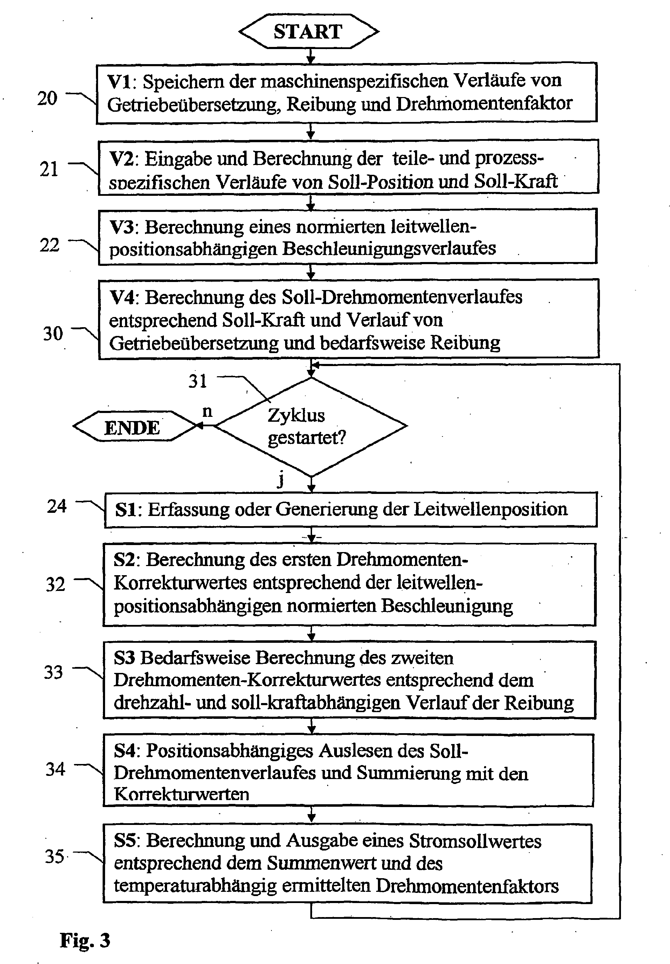

In Fig. 3 ist das vorgeschlagene Verfahren als Schrittfolge für ein zweites Ausführungsbeispiel dargestellt. Dieses unterscheidet sich von dem in Fig. 2 dargestellten Ausführungsbeispiel dadurch, dass bereits in den Vorbereitungsphasen vor dem zyklischen Ablauf der Verfahrensschritte alle leitwellenpositionsabhängigen Einflussgrößen zu einem Soll-Drehmoment zusammengefasst werden und somit im Zyklus weniger Rechenaufwand erforderlich ist.

Die Vorbereitungsphasen 20, 21 und 22 sind analog Fig.2. In der vierten Vorbereitungsphase 30 erfolgt die Berechnung des Soll-Drehmomentes $M_{soll}$ entsprechend der Soll-Kraft $F_{soll}$, dem Verlauf der Getriebeübersetzung i und bedarfsweise der Reibung $M_r$ nach der Funktion

$$M_{soll}(\varphi) = f \, [ \, F_{soll}(\varphi), \, i(\varphi), \, M_r(\varphi) \, ] \, .$$

Die Berücksichtigung der Reibung an dieser Stelle ist nur dann möglich, wenn der geschwindigkeitsabhängige Anteil der Reibung vernachlässigt oder unabhängig vom kraftabhängigen Anteil dargestellt wird.

Nach dem Startsignal 31 beginnt mit dem ersten Verfahrensschritt 24 der zyklische Ablauf. Je nach Funktionsprinzip der Pressensteuerung wird die Position $\varphi$ des Stößels 3 entweder als reale Leitwelle 41 über einen ersten Positionsgeber 51 erfasst oder als virtuelle Leitwelle 60 durch die Steuerung generiert.

Im zweiten Verfahrensschritt 32 wird der beschleunigungsabhängige erste Drehmomenten-Korrekturwert $M_{korr1}$ analog Verfahrensschritt 26 aus Fig.2 berechnet.

Im dritten Verfahrensschritt 33 wird der reibungsabhängige zweite Drehmomenten-Korrekturwert $M_{korr2}$ analog Verfahrensschritt 27 aus Fig.2 bedarfsweise berechnet, falls dieser nicht bereits in der vierten Vorbereitungsphase 30 hinreichend berücksichtigt worden ist.

Im vierten Verfahrensschritt 34 wird der in der vierten Vorbereitungsphase berechnete Soll-Drehmomentenverlauf positionsabhängig ausgelesen und mit den Korrekturwerten aus dem zweiten und dritten Verfahrensschritt 32, 33 nach der Funktion

$$M_{res} = M_{soll}(\varphi) + M_{korr1} + (M_{korr2})$$

summiert.

Im fünften Verfahrensschritt 35 wird ein Stromsollwert $I_{soll}$ aus dem Summenwert $M_{res}$ und einem der momentanen Motortemperatur $\theta$ zugeordneten Drehmomentenfaktor $K_M(\theta)$ berechnet und an den Stromregler 48 analog Verfahrensschritt 29 nach Fig. 2 entsprechend der Funktion

$$I_{soll} = f \, [ \, M_{res}, \, K_M(\theta) \, ]$$

ausgegeben.

Solange der zyklische Ablauf gestartet ist, wird der Ablauf mit dem ersten Verfahrensschritt 24 zyklisch fortgesetzt, sodass ständig aktualisierte Stromsollwerte $I_{soll}$ an den Stromregler 48 der Servomotore 1, 11 ausgegeben werden.

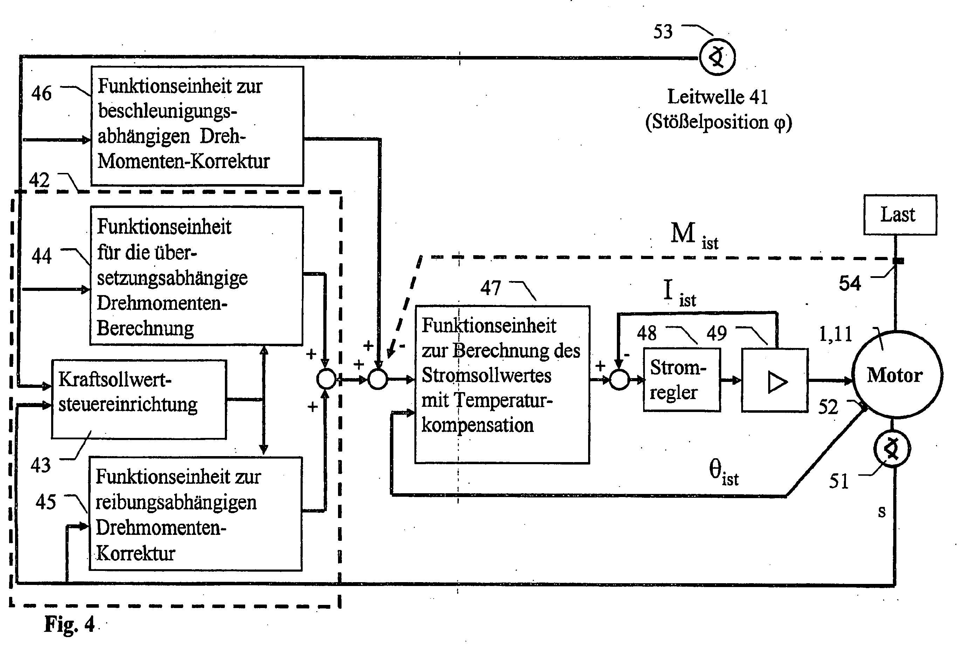

Fig. 4 zeigt den prinzipiellen Aufbau der Vorrichtung, mit dem das vorgeschlagene Verfahren realisiert werden kann. Die Servomotore 1, 11 sind mit einem ersten Positionsgeber 51 und einem Sensor für die Motortemperatur 52 ausgestattet. Die Ansteuerung erfolgt über einen Servoverstärker 49, der mit einem Stromregler 48 verbunden ist.

Optional ist der zusätzliche Einsatz eines Kraft- oder Drehmomentensensors 54 zur Istwerterfassung innerhalb eines geschlossenen Kraftregelkreises möglich.

Kernstück der Vorrichtung ist eine jedem Antrieb des Stößels oder Ziehkissens zugeordnete Kraftsollwertsteuereinrichtung 43, die den Verlauf der Soll-Kraft steuert. Die Kraftsollwertsteuereinrichtung 43 kann in Abhängigkeit von der Leitwelle 41 und/oder der Position der Servomotore 1, 11 ein in der zweiten Vorbereitungsphase 21 gespeicherten Verlauf der Soll-Kraft auslesen. Das Ausgangssignal der Kraftsollwertsteuereinrichtung 43. kann von bis zu vier Funktionseinheiten 44, 45, 46 und 47 beeinflusst werden, bevor es als Eingangssignal den Stromregler 48 ansteuert.

Die Funktionseinheit 44 für die übersetzungsabhängige Drehmomenten-Berechnung erzeugt aus der Soll-Kraft ein Soll-Drehmoment. Dabei wird die Getriebeübersetzung entsprechend der aktuellen Position der Leitwelle 41 aus dem in der ersten Vorbereitungsphase 20 in der Steuerung gespeicherten Verlauf der Getriebeübersetzung ausgelesen und mit der Soll-Kraft verknüpft.

Die Funktionseinheit 45 erzeugt den reibungsabhängigen zweiten Drehmomenten-Korrekturwert, der in Abhängigkeit von der aktuellen Soll-Kraft und der aktuellen aus dem Signal des ersten Positionsgebers 51 ermittelten Geschwindigkeit berechnet wird. Der zweite Drehmomenten-Korrekturwert wird dann mit dem Ausgangssignal der Funktionseinheit 44 summiert. In einer vorteilhaften Ausgestaltung kann die Kraftsollwertsteuereinrichtung 43 mit den Funktionseinheiten 44 und 45 zu einer Drehmomenten-Steuereinrichtung 42 zusammengefasst werden.

Die Funktionseinheit 46 erzeugt den beschleunigungsabhängigen ersten Drehmomenten-Korrekturwert, der in Abhängigkeit von der aktuellen Position und Geschwindigkeit der Leitwelle 41 und dem in der dritten Vorbereitungsphase 22 in der Steuerung gespeicherten normierten Beschleunigungsverlauf berechnet wird. Der erste Drehmomenten-Korrekturwert wird dann mit dem Ausgangssignal der Drehmomenten-Steuereinrichtung 42 summiert.

Die Funktionseinheit 47 berechnet aus dem Signal des resultierenden Soll-Drehmomentes, der aktuellen Motortemperatur und dem in der ersten Vorbereitungsphase 20 in der Steuerung gespeicherten temperaturabhängigen Verlauf des Drehmomentenfaktors einen Stromsollwert als Eingangssignal in den Stromregler 48.

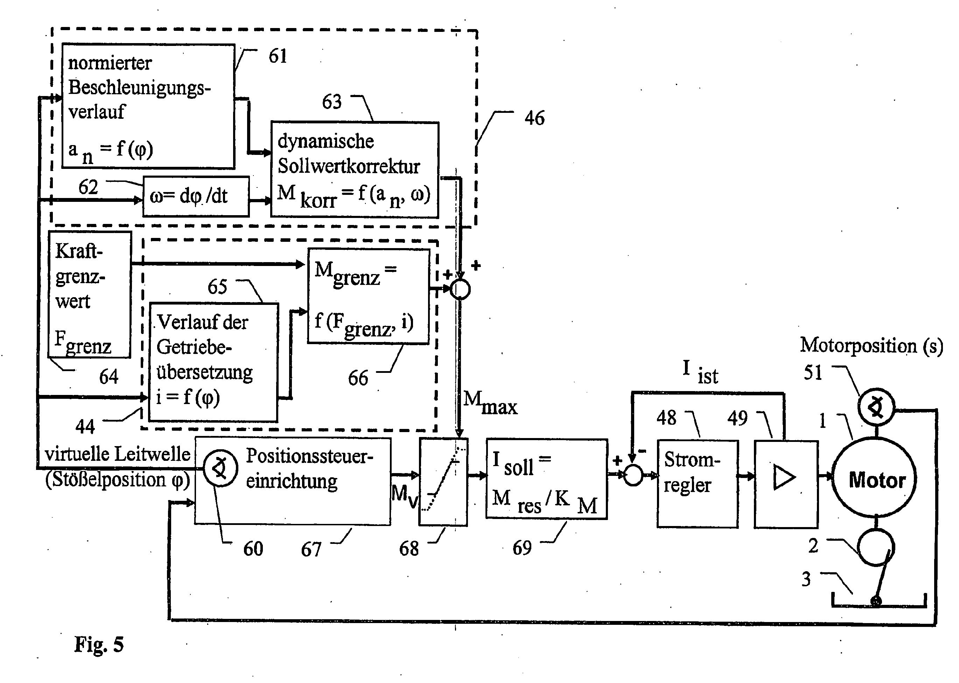

Fig. 5 zeigt ein Blockschaltbild für die Stößelkraftregelung mit einer leitwellengesteuerten beschleunigungs- und übersetzungsabhängigen Sollwertkorrektur. In diesem Ausführungsbeispiel wird der Einfluss von Reibung und Motortemperatur vernachlässigt und die Stößelkraft auf einen konstanten Maximalwert begrenzt. Diese Kraftbegrenzung berücksichtigt die variable Getriebeübersetzung und den Einfluss der beschleunigten und abgebremsten rotierenden Massen des Stößelantriebes.

Servomotor 1, Getriebe 2 und Stößel 3 sind Bestandteile der in Fig. 1 beschriebenen servo-elektrischen Presse. Der Bewegungsablauf des Stößels 3 wird durch eine Positionssteuereinrichtung 67 in Verbindung mit einer virtuellen Leitwelle 60 und dem ersten Positionsgeber 51 am Servomotor 1 gesteuert. Die Positionssteuereinrichtung 67 erzeugt ein Signal für das Soll-Drehmoment, das über eine Funktionseinheit zur Drehmomentenbegrenzung 68 und eine Funktionseinheit 69 zur Berechnung des Stromsollwertes an den Stromregler 48 übergeben wird, der über den Servoverstärker 49 den Servomotor 1 ansteuert.

Die Funktionseinheit 68 zur Drehmomentenbegrenzung begrenzt das von der Positionssteuereinrichtung 67 vorgegebene Soll-Drehmoment auf einen Maximalwert, der aus der Summe der Ausgangssignale der Funktionseinheiten 44 und 46 gebildet wird. Die Funktionseinheit 44 berechnet aus einem teilespezifisch vorgegebenen Kraftgrenzwert 64 und einem entsprechend der aktuellen Position der Leitwelle 60 ausgelesenen Verlauf der Getriebeübersetzung 65 einen statischen Drehmomenten-Grenzwert 66.

Die Funktionseinheit 46 erzeugt abhängig von der aktuellen Position der Leitwelle 60, der daraus berechneten Leitwellengeschwindigkeit 62 und dem in der Steuerung gespeicherten normierten Beschleunigungsverlauf 61 den dynamischen ersten Drehmomenten-Korrekturwert 63. Der normierte Beschleunigungsverlauf 61 entspricht dem durch die Funktionseinheit 67 gesteuerten Bewegungsablauf bei einer definierten Leitwellengeschwindigkeit 62 (Pressenhubzahl) und ist durch die Steuerung bei der Dateneingabe in der dritten Vorbereitungsphase 22 berechnet worden.

Durch die Drehmomentenbegrenzung 68 wird erreicht, dass in keiner Bewegungsphase des Stößels 3 der zulässige Kraftgrenzwert 64 zwischen Ober- und Unterwerkzeug überschritten wird. Es ist ebenso denkbar, dass anstelle eines konstanten Kraftgrenzwertes 64 ein positionsabhängiger Verlauf der Soll-Kraft berücksichtigt wird, so dass in verschiedenen Stellungen des Stößels 3 variable Kraftgrenzwerte 64 wirksam werden.

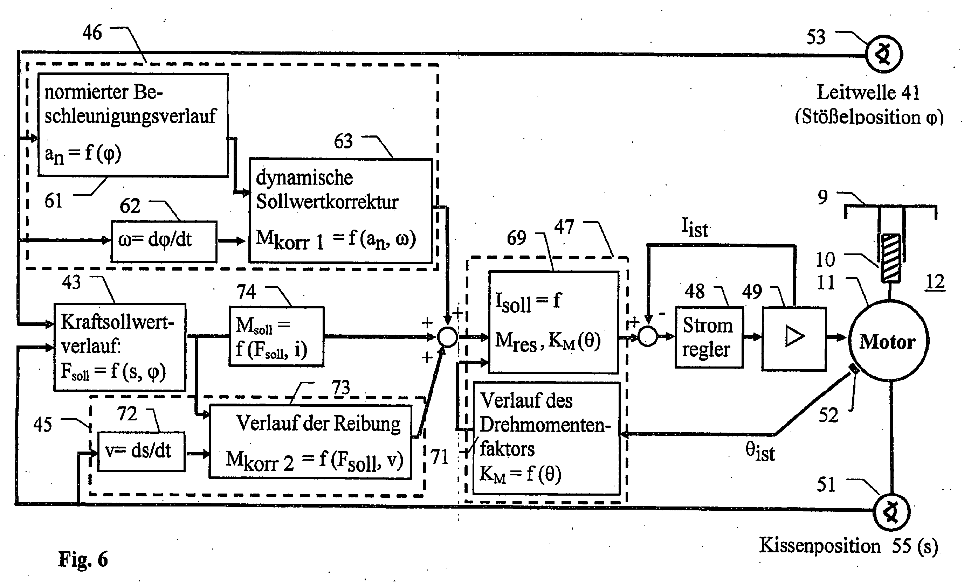

Fig. 6 zeigt ein Blockschaltbild für die Ziehkissenkraftregelung mit leitwellengesteuerter beschleunigungs- und reibungsabhängiger Sollwertkorrektur und Temperaturkompensation des Drehmomentenfaktors des Servomotors 11. In diesem Ausführungsbeispiel ist die Getriebeübersetzung konstant und das Ziehkissen 12 wird nur kraftgeregelt betrieben. Diese Kraftregelung berücksichtigt die Einflüsse von Reibung, Motortemperatur und der beschleunigten und abgebremsten rotierenden Massen des Ziehkissenantriebes.

Servomotor 11, Getriebe 10 und Druckwange 9 sind Bestandteile der in Fig. 1 beschriebenen servo-elektrischen Presse. Der Servomotor 11 ist mit einem Sensor für die Motortemperatur 52 und einem ersten Positionsgeber 51 ausgestattet. Die Position des Stößels 3 wird durch den zweiten Positionsgeber 53 erfasst und dient als reale Leitwelle 41.

Die Funktion des Ziehkissens 11 wird durch eine Kraftsollwertsteuereinrichtung 43 gesteuert, die den Verlauf der Soll-Kraft berechnet, speichert und abhängig von der Position der Leitwelle 41 und/oder des Ziehkissens 12 ausliest. Die ausgelesene Soll-Kraft wird einerseits an die Funktionseinheit 74 zur Berechnung des Soll-Drehmomentes entsprechend der Getriebeübersetzung und andererseits an die Funktionseinheit 45 des reibungsabhängigen zweiten Drehmomenten-Korrekturwertes übergeben. Zur Ermittlung des zweiten Drehmomenten-Korrekturwertes $M_{korr2}$ wird der aus dem Signal des ersten Positionsgebers 51 berechnete Geschwindigkeitswert 72 und der in der ersten Vorbereitungsphase 20 in der Steuerung gespeicherte Verlauf der Reibung 73 berücksichtigt.

Die Funktionseinheit 46 erzeugt abhängig von der aktuellen Position der Leitwelle 41, der daraus berechneten Leitwellengeschwindigkeit 62 und dem in der Steuerung gespeicherten normierten Beschleunigungsverlauf 61 einen dynamischen ersten Drehmomenten-Korrekturwert $M_{korr1}$ 63.

Der normierte Beschleunigungsverlauf 61 entspricht im Ziehbereich dem Bewegungsablauf des Stößels 3 bei einer definierten Leitwellengeschwindigkeit (Pressenhubzahl) und ist durch die Steuerung bei der Dateneingabe in der dritten Vorbereitungsphase 22 berechnet worden.

Anschließend wird das Soll-Moment mit dem ersten und zweiten Drehmomenten-Korrekturwert summiert und an die Funktionseinheit zur Berechnung des Strom-Sollwertes mit Temperaturkompensation des Drehmomeritenfaktors 47 übergeben. Diese berechnet aus dem Signal des resultierenden Soll-Drehmomentes, der aktuellen Motortemperatur und dem in der Steuerung gespeicherten temperaturabhängigen Verlauf des Drehmomentenfaktors 71 einen Stromsollwert 69 für den Stromregler 48, der über den Servoverstärker 49 den Servomotor 11 ansteuert.

Durch die beschriebene Kraftregelung wird erreicht, dass sich die von der Kraftsollwertsteuereinrichtung 43 vorgegebene Soll-Kraft in jeder Bewegungsphase des Ziehkissens 12 an der Druckwange 9 einstellt.

Bezugszeichenliste

| 1 | erster Servomotor |
|---|---|
| 2 | erstes Getriebe |
| 3 | Stößel |
| 4 | Oberwerkzeug |
| 5 | Unterwerkzeug |
| 6 | Blechhalterrahmen |
| 7 | Ziehstifte |
| 8 | Gestell |
| 9 | Druckwange |
| 10 | zweites Getriebe |
| 11 | zweiter Servomotor |
| 12 | Ziehkissen |

| 20 | erste Vorbereitungsphase des ersten und zweiten Ausführungsbeispiels |
|---|---|
| 21 | zweite Vorbereitungsphase des ersten und zweiten Ausführungsbeispiels |
| 22 | dritte Vorbereitungsphase des ersten und zweiten Ausführungsbeispiels |
| 23 | Startsignal |
| 24 | erster Verfahrensschritt des ersten und zweiten Ausführungsbeispiels |
| 25 | zweiter Verfahrensschritt des ersten Ausführungsbeispiels |
| 26 | dritter Verfahrensschritt des ersten Ausführungsbeispiels |
| 27 | vierter Verfahrensschritt des ersten Ausführungsbeispiels |
| 28 | fünfter Verfahrensschritt des ersten Ausführungsbeispiels |
| 29 | sechster Verfahrensschritt des ersten Ausführungsbeispiels |
| 30 | vierte Vorbereitungsphase des zweiten Ausführungsbeispiels |
| 31 | Startsignal |
| 32 | zweiter Verfahrensschritt des zweiten Ausführungsbeispiels |
| 33 | dritter Verfahrensschritt des zweiten Ausführungsbeispiels |
| 34 | vierter Verfahrensschritt des zweiten Ausführungsbeispiels |
| 35 | fünfter Verfahrensschritt des zweiten Ausführungsbeispiels |
| 41 | (reale) Leitwelle |
| 42 | Drehmomenten-Steuereinrichtung |
| 43 | Kraftsollwertsteuereinrichtung |
| 44 | Funktionseinheit für die übersetzungsabhängige Drehmomenten-Berechnung |
| 45 | Funktionseinheit für den reibungsabhängigen zweiten Drehmomenten-Korrekturwert |
| 46 | Funktionseinheit für den beschleunigungsabhängigen ersten Drehmomenten-Korrekturwert |
| 47 | Funktionseinheit zur Berechnung des Strom-Sollwertes mit Temperaturkompensation des Drehmomentenfaktors |
| 48 | Stromregler |
| 49 | Servoverstärker |

| 51 | erster Positionsgeber |
|---|---|
| 52 | Sensor für Motortemperatur |
| 53 | zweiter Positionsgeber |
| 54 | Kraft- oder Drehmomentensensor |
| 55 | Kissenposition |

| 60 | virtuelle Leitwelle |
|---|---|
| 61 | normierter Beschleunigungsverlauf |
| 62 | Leitwellengeschwindigkeit |
| 63 | erster Drehmomenten-Korrekturwert |
| 64 | Kraftgrenzwert |
| 65 | Getriebeübersetzung |
| 66 | statischer Drehmomenten-Grenzwertes |
| 67 | Positionssteuereinrichtung |
| 68 | Funktionseinheit zur Drehmomentenbegrenzung |

69 Funktionseinheit zur Berechnung des Stromsollwertes

71 Verlauf des Drehmomentenfaktors
72 Geschwindigkeitswert
73 Verlauf der Reibung
74 Funktionseinheit zur Berechnung des Soll-Drehmomentes

**Patentansprüche**

1. Verfahren zur Steuerung und Regelung von Kräften an servo-elektrischen Pressen, bei denen die Drehmomente der Servomotoren (1, 11) steuerbar sind, **dadurch gekennzeichnet, dass** die aus dem eingebbaren Soll-Verlauf der teile- und prozess-spezifischen Kräfte berechenbaren Soll-Drehmomente für den oder die Servomotoren (1, 11) zum Antrieb des Stößels (3) und/oder des Ziehkissens (12) in Abhängigkeit von Einflussgrößen, wie dem Verlauf der Getriebeübersetzung $i(\varphi)$, die Beschleunigung $\alpha_n = f(\varphi)$ und die Reibung $M_r$ mit durch eine Leitwelle (41,60) und/oder durch die Kissenposition (55) gesteuerte Drehmomenten-Korrekturwerte $M_{korr1} = f[\alpha_n(\varphi), J, \omega]$ und $M_{korr2} = Mr = f(F_{soll}, v)$ und $M_{soll}(\varphi) = f[F_{soll}(\varphi), i(\varphi)]$ zu einem resultierenden Soll-Drehmoment $M_{res}$ korrigierbar oder begrenzbar sind und dass der Strom-Sollwert für den Stromregler (48) aus dem resultierenden Soll-Drehmoment $M_{res}$ und dem temperaturabhängigen Drehmomentenfaktor $K_M(\theta)$ der Servomotoren (1,11) erzeugbar ist.

2. Verfahren zur Steuerung und Regelung von Kräften an servo-elektrischen Pressen nach Anspruch 1, **dadurch gekennzeichnet, dass** vor Beginn des Verfahrensablaufes in der ersten Vorbereitungsphase (20) die maschinenspezifischen Verläufe der Getriebeübersetzung und bedarfsweise der Reibung und der Drehmomentenfaktor der Servomotore (1, 11) in der Steuerung gespeichert werden,
dass in der zweiten Vorbereitungsphase (21) die teilespezifischen Soll-Verläufe für Position und Kraft eingegeben, berechnet und in der Steuerung gespeichert werden und
dass in der dritten Vorbereitungsphase (22) aus dem Positionsverlauf und der Getriebeübefsetzung ein normierter leitwellenpositionsabhängiger Beschleunigungsverlauf (61) für die Servomotore (1, 11) berechnet wird.

3. Verfahren zur Steuerung und Regelung von Kräften an servo-elektrischen Pressen nach Anspruch 1 oder 2, **dadurch gekennzeichnet,**
**dass** während des Bewegungszyklus im ersten Verfahrensschritt (24) die Position der Leitwelle (41, 60) erfasst oder generiert wird,
**dass** in einem weiteren Verfahrensschritt das Soll-Drehmoment aus dem Kraftverlauf und der der momentanen Leitwellenposition zugeordneten Getriebeübersetzung berechnet wird,
**dass** pressentypabhängig in einem weiteren Verfahrensschritt ein erster Drehmomenten-Korrekturwert (63) aus dem der momentanen Leitwellenposition zugeordneten normierten Beschleunigungswert, aus der momentanen Leitwellengeschwindigkeit (62) und aus der zu beschleunigenden Masse berechnet wird,
**dass** pressentypabhängig in einem weiteren Verfahrensschritt ein zweiter Drehmomenten-Korrekturwert aus dem dem momentanen Kraftsollwert und der Istgeschwindigkeit zugeordneten Reibungswert berechnet wird,
**dass** in einem weiteren Verfahrensschritt aus dem Soll-Drehmoment mit dem ersten und zweiten Drehmomenten-Korrekturwert ein Summenwert gebildet wird und
**dass** in einem weiteren Verfahrensschritt aus dem Summenwert und einem der momentanen Motortemperatur zugeordneten Drehmomentenfaktor ein Stromsollwert berechnet, an den Stromregler (48) ausgegeben und der Ablauf zyklisch fortgesetzt wird.

4. Verfahren zur Steuerung und Regelung von Kräften an servo-elektrischen Pressen nach Anspruch 1, **dadurch gekennzeichnet, dass** vor Beginn des Verfahrensablaufes in der ersten Vorbereitungsphase (20) die maschinenspezifischen Verläufe der Getriebeübersetzung und bedarfsweise der Reibung und der Drehmomentenfaktor der Servomotore (1, 11) in der Steuerung gespeichert werden,
dass in der zweiten Vorbereitungsphase (21) die teilespezifischen Soll-Verläufe für Position und Kraft eingegeben, berechnet und in der Steuerung gespeichert werden,
dass in der dritten Vorbereitungsphase (22) aus dem Positionsverlauf und der Getriebeübersetzung ein normierter leitwellenpositionsabhängiger Beschleunigungsverlauf (61) für die Servomotore (1, 11) berechnet wird und
dass in der vierten Vorbereitungsphase (30) aus dem Kraftverlauf, dem Verlauf der Getriebeübersetzung und bedarfsweise dem Verlauf der Reibung ein leitwellenpositionsabhängiger Drehmomentenverlauf berechnet wird.

5. Verfahren zur Steuerung und Regelung von Kräften an servo-elektrischen Pressen nach Anspruch 1 oder 4, **dadurch**

**gekennzeichnet,**
**dass** während des Bewegungszyklus im ersten Verfahrensschritt (24) die Position der Leitwelle (41, 60) erfasst oder generiert wird,
**dass** pressentypabhängig in einem weiteren Verfahrensschritt ein erster Drehmomenten-Korrekturwert aus dem der momentanen Leitwellenposition zugeordneten normierten Beschleunigungswert, der momentanen Leitwellengeschwindigkeit und der zu beschleunigenden Masse berechnet wird,
**dass** pressentypabhängig in einem weiteren Verfahrensschritt ein zweiter Drehmomenten-Korrekturwert aus dem dem momentanen Kraftsollwert und der Istgeschwindigkeit zugeordneten Reibungswert berechnet wird,
**dass** in einem weiteren Verfahrensschritt das Soll-Drehmoment entsprechend der aktuellen Position aus dem Soll-Drehmomentenverlauf ausgelesen und mit dem oder den Drehmomenten-Korrekturwerten ein Summenwert gebildet wird und
**dass** in einem weiteren Verfahrensschritt aus dem Summenwert und einem der momentanen Motortemperatur zugeordneten Drehmomentenfaktor ein Stromsollwert berechnet, an den Stromregler (48) ausgegeben und der Ablauf zyklisch fortgesetzt wird.

6. Verfahren zur Steuerung und Regelung von Kräften an servo-elektrischen Pressen nach einem oder mehreren der vorstehenden Ansprüche, **dadurch gekennzeichnet,**
   **dass** in der dritten Vorbereitungsphase (22) der normierte Beschleunigungsverlauf (61) der rotativ und/oder linear bewegten Massen berechnet wird und
   **dass** während des Bewegungszyklus in einem weiteren Verfahrensschritt ein Korrekturwert aus dem der momentanen Leitwellenposition zugeordneten normierten rotativ und/oder linearen Beschleunigungswert, der momentanen Leitwellengeschwindigkeit (62) und der zu beschleunigenden rotativ und/oder linearen Massen berechnet wird.

7. Vorrichtung zur Steuerung und Regelung von Kräften an servo-elektrischen Pressen, bei denen die Drehmomente der Servomotoren (1, 11) steuerbar sind, **dadurch gekennzeichnet,**
   **dass** mindestens ein mit einem Servoverstärker (49) verbundener Stromregler (48) seinen Sollwert von einer Funktionseinheit zur Berechnung des Strom-Sollwertes (69) erhält, deren Eingangsgrößen einerseits durch das Signal des in Summe von einer leitwellengesteuerten Kraftsollwertsteuereinrichtung (43), von einer leitwellengesteuerten Funktionseinheit für die übersetzungsabhängige Drehmomenten-Berechnung (44), von einer leitwellengesteuerten Funktionseinheit für den beschleunigungsabhängigen ersten Drehmomenten-Korrekturwert (46) und von einer leitwellengesteuerten Funktionseinheit für den reibungsabhängigen zweiten Drehmomenten-Korrekturwert (45) ermittelten resultierenden Soll-Drehmoment und andererseits durch das Signal der Funktionseinheit für den temperaturabhängigen Verlauf des Drehmomentenfaktors (71) gebildet werden.

8. Vorrichtung zur Steuerung und Regelung von Kräften an servo-elektrischen Pressen, bei denen die Drehmomente der Servomotoren (1, 11) steuerbar sind, **dadurch gekennzeichnet,**
   **dass** mindestens ein mit einem Servoverstärker (49) verbundener Stromregler (48) seinen Sollwert von einer Funktionseinheit zur Berechnung des Strom-Sollwertes (69) erhält, deren Eingangsgrößen einerseits durch das Signal des in Summe von einer leitwellengesteuerten Drehmomenten-Steuereinrichtung (42) und einer leitwellengesteuerten Funktionseinheit für den beschleunigungsabhängigen ersten Drehmomenten-Korrekturwert (46) ermittelten resultierenden Soll-Drehmoment zur Vorsteuerung eines Kraftregelkreis mit Kraft- oder Drehmomentensensor (54) und andererseits durch das Signal der Funktionseinheit für den temperaturabhängigen Verlauf des Drehmomentenfaktors (71) gebildet werden.

## Claims

1. Method for controlling and regulating forces in servo-electric presses in which the torques of the servo motors (1, 11) can be controlled, **characterized**
   **in that** the nominal torques, which can be calculated from the inputtable nominal profile of the part-specific and process-specific forces, for the servo motor(s) (1, 11) for driving the ram (3) and/or for driving the die cushion (12) can be corrected or limited to a resultant nominal torque $M_{res}$ as a function of influential variables such as the profile of the transmission ratio $i(\varphi)$, the acceleration $\alpha_n = f(\varphi)$ and the friction $M_r$ with torque correction values $M_{korr1} = f[\alpha_n(\varphi), J, \omega]$ and $M_{korr2} = Mr = f(F_{soll}, V)$ and $M_{soll}(\varphi) = f[F_{soll}(\varphi), i(\varphi)]$ which are controlled by means of a main shaft (41, 60) and/or by means of the cushion position (55), and in that the current nominal value for the current regulator (48) can be generated from the resultant nominal torque $M_{res}$ and from the temperature-dependent torque factor $K_H(\theta)$ of the servo motors (1, 11).

2. Method for controlling and regulating forces in servo-electric presses according to Claim 1, **characterized in that**, before the start of the process of the method, in the first preparation phase (20), the machine-specific profiles of the transmission ratio and, if required, of the friction and of the torque factor of the servo motors (1, 11) are stored in the controller,

   **in that**, in the second preparation phase (21), the part-specific nominal profiles for position and force are input, calculated and stored in the controller, and

   **in that**, in the third preparation phase (22), a normalized main-shaft-position-dependent acceleration profile (61) for the servo motors (1, 11) is calculated from the position profile and from the transmission ratio.

3. Method for controlling and regulating forces in servo-electric presses according to Claim 1 or 2, **characterized in that**, during the movement cycle, in the first method step (24), the position of the main shaft (41, 60) is measured or generated,

   **in that**, in a further method step, the nominal torque is calculated from the force profile and from the transmission ratio assigned to the instantaneous main-shaft position,

   **in that**, in a further method step, a first torque correction value (63) is calculated in a press-type-specific manner from the normalized acceleration value assigned to the instantaneous main-shaft position, from the instantaneous main-shaft speed (62) and from the mass to be accelerated,

   **in that**, in a further method step, a second torque correction value is calculated in a press-type-specific manner from the friction value assigned to the instantaneous force nominal value and the actual speed,

   **in that**, in a further method step, a cumulative value is formed from the nominal torque with the first and second torque correction value, and

   **in that**, in a further method step, a current nominal value is calculated from the cumulative value and a torque factor assigned to the instantaneous motor temperature, said current nominal value is output to the current regulator (48) and the process is continued cyclically.

4. Method for controlling and regulating forces in servo-electric presses according to Claim 1, **characterized in that**, before the start of the process of the method, in the first preparation phase (20), the machine-specific profiles of the transmission ratio and, if required, of the friction and of the torque factor of the servo motors (1, 11) are stored in the controller,

   **in that**, in the second preparation phase (21), the part-specific nominal profiles for position and force are input, calculated and stored in the controller,

   **in that**, in the third preparation phase (22), a normalized main-shaft-position-dependent acceleration profile (61) for the servo motors (1, 11) is calculated from the position profile and from the transmission ratio, and

   **in that**, in the fourth preparation phase (30), a main-shaft-position-dependent torque profile is calculated from the force profile, the profile of the transmission ratio and, if required, the profile of the friction.

5. Method for controlling and regulating forces in servo-electric presses according to Claim 1 or 4, **characterized in that**, during the movement cycle, in the first method step (24), the position of the main shaft (41, 60) is measured or generated,

   **in that**, in a further method step, a first torque correction value is calculated in a press-type-specific manner from the normalized acceleration value assigned to the instantaneous main-shaft position, from the instantaneous main-shaft speed and from the mass to be accelerated,

   **in that**, in a further method step, a second torque correction value is calculated in a press-type-specific manner from the friction value assigned to the instantaneous force nominal value and the actual speed,

   **in that**, in a further method step, the nominal torque is read out from the nominal torque profile corresponding to the present position and a cumulative value is formed with the torque correction value(s), and

   **in that**, in a further method step, a current nominal value is calculated from the cumulative value and a torque factor assigned to the instantaneous motor temperature, said current nominal value is output to the current regulator (48) and the process is continued cyclically.

6. Method for controlling and regulating forces in servo-electric presses according to one or more of the preceding claims, **characterized in that**, in the third preparation phase (22), the normalized acceleration profile (61) of the masses which are moved in rotation and/or linearly is calculated, and

   **in that**, during the movement cycle, in a further method step, a correction value is calculated from the normalized rotational and/or linear acceleration value assigned to the instantaneous main-shaft position, from the instantaneous main-shaft speed (62) and from the rotational and/or linear masses to be accelerated.

7. Device for controlling and regulating forces in servo-electric presses in which the torques of the servo motors (1, 11) can be controlled, **characterized in that** at least one current regulator (48) which is connected to a servo booster (49) receives its nominal value from a functional unit for calculating the current nominal value (69), the input variables of which functional unit are formed firstly by the signal of the resultant nominal torque, determined overall by means of a main-shaft-controlled force nominal value control device (43), by means of a main-shaft-controlled functional unit for the transmission-ratio-dependent torque calculation (44), by means of a main-shaft-controlled functional unit for the acceleration-dependent first torque correction value (46) and by means of a main-shaft-controlled functional unit for the friction-dependent second torque correction value (45), and secondly by the signal of the functional unit for the temperature-dependent profile of the torque factor (71).

8. Device for controlling and regulating forces in servo-electric presses in which the torques of the servo motors (1, 11) can be controlled, **characterized in that** at least one current regulator (48) which is connected to a servo booster (49) receives its nominal value from a functional unit for calculating the current nominal value (69), the input variables of which functional unit are formed firstly by the signal of the resultant nominal torque, determined overall by means of a main-shaft-controlled torque control device (42) and by means of a main-shaft-controlled functional unit for the acceleration-dependent first torque correction value (46), for the pilot control of a force regulating loop with a force or torque sensor (54), and secondly by the signal of the functional unit for the temperature-dependent profile of the torque factor (71).

**Revendications**

1. Procédé pour commander et réguler des forces sur des presses servoélectriques, avec lesquelles les couples des servomoteurs (1, 11) sont contrôlables, **caractérisé en ce que** les couples prévus, qui peuvent être calculés à partir de la courbe prévue, pouvant être entrée, des forces spécifiques aux pièces et au processus, pour le ou les servomoteurs (1, 11) pour l'entraînement du coulisseau (3) et/ou du coussin de serre-flan (12) en fonction de grandeurs d'influence telles que la courbe du rapport de transmission i ($\varphi$), l'accélération $\alpha_n = f(\varphi)$ et le frottement $M_r$, peuvent être corrigés ou limités avec des valeurs de correction de couple $M_{korr1} = f[\alpha_n(\varphi), J, \omega]$ et $M_{korr2} = Mr = f(F_{soll}, v)$ et $M_{soll}(\varphi) = f[F_{soll}(\varphi), i(\varphi)]$, commandées par un arbre directeur (41, 60) et/ou par la position du coussin (55) pour obtenir un couple théorique résultant $M_{res}$ et **en ce que** la valeur prévue du courant pour le régulateur de courant (48) peut être générée à partir du couple prévu résultant $M_{res}$ et du facteur de couple $K_M(\theta)$, dépendant de la température, des servomoteurs (1, 11).

2. Procédé pour commander et réguler des forces sur des presses servoélectriques selon la revendication 1, **caractérisé en ce que**, avant le début du déroulement du procédé dans la première phase de préparation (20), les courbes spécifiques à la machine du rapport de transmission et le cas échéant du frottement et le facteur de couple des servomoteurs (1, 11) sont mémorisés dans la commande, **en ce que**, dans la deuxième phase de préparation (21), les courbes théoriques spécifiques aux pièces pour la position et la force sont entrées, calculées et mémorisées dans la commande et **en ce que**, dans la troisième phase de préparation (22), une courbe d'accélération (61) normalisée et dépendante de la position de l'arbre directeur pour les servomoteurs (1, 11) est calculée à partir de la courbe de position et du rapport de transmission.

3. Procédé pour commander et réguler des forces sur des presses servoélectriques selon la revendication 1 ou 2, **caractérisé en ce que** la position de l'arbre directeur (41, 60) est enregistrée ou générée pendant le cycle du mouvement lors de la première étape du procédé (24), **en ce que**, dans une autre étape du procédé, le couple prévu est calculé à partir de la courbe de force et du rapport de transmission attribué à la position momentanée de l'arbre directeur, **en ce que**, en fonction du type de presse et dans une autre étape du procédé, une première valeur de correction de couple (63) est calculée à partir de la valeur d'accélération normalisée, attribuée à la position momentanée de l'arbre directeur, à partir de la vitesse momentanée de l'arbre directeur (62) et à partir de la masse à accélérer, **en ce que**, en fonction du type de presse et dans une autre étape du procédé, une seconde valeur de correction de couple est calculée à partir de la valeur de frottement attribuée à la valeur prévue de force momentanée et à la vitesse réelle, **en ce qu'**une valeur cumulée est formée dans une autre étape du procédé à partir du couple prévu avec la première et la seconde valeur de correction de couple et **en ce que**, dans une autre étape du procédé, une valeur prévue de courant est calculée à partir de la valeur cumulée et d'un facteur de couple attribué à la température de moteur momentanée, est sortie sur le régulateur de courant (48) et le déroulement est poursuivi de façon cyclique.

4. Procédé pour commander et réguler des forces sur des presses servoélectriques selon la revendication 1, **caractérisé en ce que**, avant le début du déroulement du procédé dans la première phase de préparation (20), les courbes spécifiques à la machine du rapport de transmission et le cas échéant du frottement et le facteur de couple des servomoteurs (1, 11) sont mémorisés dans la commande,
**en ce que**, dans la deuxième phase de préparation (21), les courbes théoriques spécifiques aux pièces pour la position et la force sont entrées, calculées et mémorisées dans la commande,
**en ce que**, dans la troisième phase de préparation (22), une courbe d'accélération (61) normalisée et dépendante de la position de l'arbre directeur pour les servomoteurs (1, 11) est calculée à partir de la courbe de position et du rapport de transmission et
**en ce que**, dans la quatrième phase de préparation (30), une courbe de couple dépendante de la position de l'arbre directeur est calculée à partir de la courbe de force, de la courbe du rapport de transmission et éventuellement de la courbe de frottement.

5. Procédé pour commander et réguler des forces sur des presses servoélectriques selon la revendication 1 ou 4, **caractérisé en ce que** la position de l'arbre directeur (41, 60) est enregistrée ou générée pendant le cycle du mouvement lors de la première étape du procédé (24),
**en ce que**, en fonction du type de presse et dans une autre étape du procédé, une première valeur de correction de couple est calculée à partir de la valeur d'accélération normalisée, attribuée à la position momentanée de l'arbre directeur, à partir de la vitesse momentanée de l'arbre directeur et à partir de la masse à accélérer,
**en ce que**, en fonction du type de presse et dans une autre étape du procédé, une seconde valeur de correction de couple est calculée à partir de la valeur de frottement attribuée à la valeur prévue de force momentanée et à la vitesse réelle,
**en ce que**, dans une autre étape du procédé, le couple prévu est lu en fonction de la position actuelle à partir de la courbe de couple prévue et une valeur cumulée est formée avec la ou les valeurs de correction de couple et
**en ce que**, dans une autre étape du procédé, une valeur prévue du courant est calculée à partir de la valeur cumulée et d'un facteur de couple attribué à la température de moteur momentanée, est sortie sur le régulateur de courant (48) et le déroulement est poursuivi de façon cyclique.

6. Procédé pour commander et réguler des forces sur des presses servoélectriques selon l'une quelconque ou plusieurs des revendications précédentes, **caractérisé en ce que**,
dans la troisième phase de préparation (22), la courbe d'accélération (61) normalisée des masses déplacées de façon rotative et/ou linéaire est calculée et
**en ce que**, pendant le cycle de mouvement dans une autre étape du procédé, une valeur de correction est calculée à partir de la valeur d'accélération rotative et/ou linéaire, normalisée, attribuée à la position momentanée de l'arbre directeur, de la vitesse momentanée de l'arbre directeur (62) et des masses rotatives et/ou linéaires à accélérer.

7. Dispositif pour commander et réguler des forces sur des presses servoélectriques, avec lesquelles les couples des servomoteurs (1, 11) sont contrôlables, **caractérisé en ce que**
au moins un régulateur de courant (48) relié à un servoamplificateur (49) reçoit sa valeur prévue d'une unité fonctionnelle pour le calcul de la valeur prévue du courant (69), dont des grandeurs d'entrée sont formées d'une part par le signal du couple prévu résultant, calculé en faisant la somme d'un dispositif de commande de valeur prévue de force (43) commandé par l'arbre directeur, d'une unité fonctionnelle commandée par l'arbre directeur pour le calcul du couple (44) dépendant du rapport, d'une unité fonctionnelle commandée par l'arbre directeur pour la première valeur de correction de couple (46) dépendante de l'accélération et d'une unité fonctionnelle commandée par l'arbre directeur pour la seconde valeur de correction de couple (45) dépendante du frottement, et d'autre part par le signal de l'unité fonctionnelle pour la courbe, dépendante de la température, du facteur de couple (71).

8. Dispositif pour commander et réguler des forces sur des presses servoélectriques, avec lesquelles les couples des servomoteurs (1, 11) sont contrôlables, **caractérisé en ce que**
au moins un régulateur de courant (48) relié à un servoamplificateur (49) reçoit sa valeur prévue d'une unité fonctionnelle pour le calcul de la valeur prévue du courant (69), dont les grandeurs d'entrée sont formées d'une part par le signal du couple prévu résultant, calculé en faisant la somme d'un dispositif de commande de couple (42) commandé par l'arbre directeur et d'une unité fonctionnelle commandée par l'arbre directeur pour la première valeur de correction de couple (46) dépendante de l'accélération, pour la pré-commande d'un circuit régulateur de force avec capteur de force ou de couple (54) et d'autre part par le signal de l'unité fonctionnelle pour la courbe, dépendante de la température, du facteur de couple (71).

**Fig. 1**

START

20 — **V1**: Speichern der maschinenspezifischen Verläufe von Getriebeübersetzung, Reibung und Drehmomentenfaktor

21 — **V2**: Eingabe und Berechnung der teile- und prozess-spezifischen Verläufe von Soll-Position und Soll-Kraft

22 — **V3**: Berechnung eines normierten leitwellen-positionsabhängigen Beschleunigungsverlaufes

23 —

ENDE ◄ n — Zyklus gestartet?

j

24 — **S1**: Erfassung oder Generierung der Leitwellenposition

25 — **S2**: Berechnung des Soll-Drehmomentes entsprechend Soll-Kraft und leitwellen-positionsabhängiger Getriebeübersetzung

26 — **S3**: Berechnung des ersten Drehmomenten-Korrekturwertes entsprechend der leitwellen-positionsabhängigen normierten Beschleunigung

27 — **S4**: Berechnung des zweiten Drehmomenten-Korrekturwertes entsprechend dem drehzahl- und soll-kraftabhängigen Verlaufs der Reibung

28 — **S5**: Summierung von Soll-Drehmoment und Korrekturwerten

29 — **S6**: Berechnung und Ausgabe eines Stromsollwertes entsprechend dem Summenwert und des temperaturabhängig ermittelten Drehmomentenfaktors

**Fig. 2**

```
        ⟨ START ⟩
             │
             ▼
┌─────────────────────────────────────────────────────┐
│ V1: Speichern der maschinenspezifischen Verläufe von│
│ Getriebeübersetzung, Reibung und Drehmomentenfaktor │
└─────────────────────────────────────────────────────┘
             │
             ▼
┌─────────────────────────────────────────────────────┐
│ V2: Eingabe und Berechnung der teile- und prozess-  │
│ spezifischen Verläufe von Soll-Position und Soll-Kraft│
└─────────────────────────────────────────────────────┘
             │
             ▼
┌─────────────────────────────────────────────────────┐
│ V3: Berechnung eines normierten leitwellen-         │
│ positionsabhängigen Beschleunigungsverlaufes        │
└─────────────────────────────────────────────────────┘
             │
             ▼
┌─────────────────────────────────────────────────────┐
│ V4: Berechnung des Soll-Drehmomentenverlaufes       │
│ entsprechend Soll-Kraft und Verlauf von             │
│ Getriebeübersetzung und bedarfsweise Reibung        │
└─────────────────────────────────────────────────────┘
```

- 20 — V1
- 21 — V2
- 22 — V3
- 30 — V4

```
        31
             ◇ Zyklus gestartet?
    ⟨ ENDE ⟩ ← n      │ j
                      ▼
┌─────────────────────────────────────────────────────┐
│ S1: Erfassung oder Generierung der Leitwellenposition│
└─────────────────────────────────────────────────────┘
             │
             ▼
┌─────────────────────────────────────────────────────┐
│ S2: Berechnung des ersten Drehmomenten-             │
│ Korrekturwertes entsprechend der leitwellen-        │
│ positionsabhängigen normierten Beschleunigung       │
└─────────────────────────────────────────────────────┘
             │
             ▼
┌─────────────────────────────────────────────────────┐
│ S3 Bedarfsweise Berechnung des zweiten              │
│ Drehmomenten-Korrekturwertes entsprechend dem       │
│ drehzahl- und soll-kraftabhängigen Verlauf der Reibung│
└─────────────────────────────────────────────────────┘
             │
             ▼
┌─────────────────────────────────────────────────────┐
│ S4: Positionsabhängiges Auslesen des Soll-          │
│ Drehmomentenverlaufes und Summierung mit den        │
│ Korrekturwerten                                     │
└─────────────────────────────────────────────────────┘
             │
             ▼
┌─────────────────────────────────────────────────────┐
│ S5: Berechnung und Ausgabe eines Stromsollwertes    │
│ entsprechend dem Summenwert und des                 │
│ temperaturabhängig ermittelten Drehmomentenfaktors  │
└─────────────────────────────────────────────────────┘
```

- 24 — S1
- 32 — S2
- 33 — S3
- 34 — S4
- 35 — S5

Fig. 3

Fig. 4

Fig. 5

EP 1 917 565 B1

46

53

Leitwelle 41
(Stößelposition φ)

normierter Beschleunigungsverlauf

$a_n = f(\varphi)$

61

63

dynamische
Sollwertkorrektur

$M_{korr} 1 = f(a_n, \omega)$

62

$\omega = d\varphi/dt$

9

$I_{ist}$

69     47

10

11     12

43

Kraftsollwertverlauf:

$F_{soll} = f(s, \varphi)$

74

$M_{soll} = f(F_{soll}, i)$

$+$
$+$
$+$

$I_{soll} = f$
$M_{res}, K_M(\theta)$

48     49

Strom
regler

$\triangleright$

Motor

45

73

72

$v = ds/dt$

Verlauf der Reibung

$M_{korr} 2 = f(F_{soll}, v)$

71

Verlauf des
Drehmomentenfaktors

$K_M = f(\theta)$

52

$\theta_{ist}$

51

Kissenposition 55 (s)

**Fig. 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11058100 A
- DE 19536728 A1
- EP 1201416 A1
- EP 0922562 A1
- DE 19952941 A1